# EUROPÄISCHE PATENTANMELDUNG

(11) **EP 1 243 480 A2**
(43) Veröffentlichungstag der Anmeldung: **25.09.2002**
(21) Anmeldenummer: 02004207.3
(22) Anmeldetag: 25.02.2002
(51) Int. Cl.: B60R 21/16

(54) **Gassack-Modul**

(30) Priorität: 23.03.2001 DE 10114208
(71) Anmelder: TRW Automotive Safety Systems GmbH & Co. KG, 63743 Aschaffenburg (DE)
(72) Erfinder: Lorenz, Christian, 63849 Leidersbach 3 (DE)
(74) Vertreter: Sties, Jochen, Dipl.-Ing.

(57) **Zusammenfassung**

Die Erfindung betrifft ein Verfahren zum Zusammenfügen von Bauteilen eines Gassack-Moduls für ein Fahrzeuginsassen-Rüchhaltesystem. Gemäß dieses Verfahrens wird mindestens ein Bauteil des Gassack-Moduls, bevorzugterweise der Gassack (10), in einer Hülle (12) verstaut. Anschließend wird ein Unterdruck in der Hülle (12) erzeugt und die Hülle (12) wird gasdicht verschlossen. Ein nach diesem Verfahren zusammengefügtes Gassack-Modul (22) weist den Vorteil auf, daß so ein besonders kleines Packmaß des bzw. der in der Hülle (12) eingeschlossenen Bauteile erreicht werden kann und daß dieses bzw. diese vor Feuchtigkeit und Staub geschützt sind.

Die Erfindung betrifft ferner ein Gassack-Modul für ein Fahrzeuginsassen-Rückhaltesystem, das aus mindestens zwei Bauteilen gebildet ist. Mindestens ein Bauteil (10) ist gasdicht in einer mit Unterdruck versehenen Hülle (12) eingeschlossen.

## Beschreibung

Die Erfindung betrifft ein Verfahren zum Zusammenfügen von Bauteilen eines Gassack-Moduls. Ferner betrifft die Erfindung ein Gassack-Modul, das aus mindestens zwei Bauteilen gebildet ist.

Bei herkömmlichen, aus dem Stand der Technik bekannten Gassack-Modulen wird das aus seinen einzelnen Bauteilen bestehende, fertig montierte Gassack-Modul in einen dafür vorgesehenen Bauraum des Fahrzeugs integriert. Dabei ist es wichtig, daß die Funktion des Gassack-Moduls auch über einen Zeitraum von mehreren Jahren hinweg und unter dem dadurch bedingten Einfluß von Feuchtigkeit und Staub gewährleistet ist. Weiterhin sind auch möglichst kleine räumliche Abmessungen des Gassack-Moduls erwünscht.

Die Erfindung stellt ein Gassack-Modul bereit, das auch unter dem Einfluß von Staub und Feuchtigkeit sicher und zuverlässig funktioniert und das besonders kleine räumliche Abmessungen aufweist.

Dies wird erfindungsgemäß dadurch erreicht, daß mindestens ein Bauteil des Gassack-Moduls gasdicht in einer mit Unterdruck versehenen Hülle eingeschlossen ist. Durch das gasdichte Einschließen mindestens eines Bauteils in eine Hülle wird verhindert, daß dieses Bauteil bzw. diese Bauteile Feuchtigkeit und Staub ausgesetzt sind und dadurch in seiner/ihrer Funktion beeinträchtigt werden können. Da in dem Innenraum der Hülle ein Unterdruck herrscht, wird so auch das Packmaß dieses Bauteils bzw. dieser Bauteile verkleinert. So kann beispielsweise der Gassack im gefalteten Zustand in der mit Unterdruck versehenen Hülle verstaut werden, so daß dessen Packmaß auf ein Minimum reduziert wird. Ein weiterer Vorteil ist, daß die haptische Härte des Gassacks und damit auch der darüber befindlichen Abdeckung vergrößert wird. Das "schwammige" Gefühl beim Druck auf die Abdeckung von aus dem Stand der Technik bekannten Gassack-Modulen wird so vermieden.

Die Erfindung stellt ferner ein Verfahren zum Zusammenfügen von Bauteilen eines Gassack-Moduls für ein Fahrzeuginsassen-Rückhaltesystem bereit, das folgende Schritte beinhaltet: Mindestens ein Bauteil des Gassack-Moduls wird in einer Hülle verstaut. Die Hülle wird gasdicht verschlossen, nachdem ein Unterdruck in ihrem Innenraum erzeugt wurde.

Hinsichtlich der Vorteile des erfindungsgemäßen Verfahrens wird auf die oben beschriebenen Vorteile des Gassack-Moduls verwiesen.

Weitere Merkmale und vorteilhafte Ausgestaltungen der Erfindung ergeben sich aus den Unteransprüchen.

Die Erfindung wird nachfolgend unter Bezugnahme auf zwei bevorzugte Ausführungsformen beschrieben, die in den beigefügten Zeichnungen dargestellt sind. In diesen zeigen:
- Figur 1 in einer schematischen Ansicht einen Gassack, der gemäß dem ersten Schritt eines bevorzugten erfindungsgemäßen Verfahrens gefaltet wird;
- Figuren 2 bis 6 in schematischen Seitenansichten weitere Verfahrenschritte des bevorzugten erfindungsgemäßen Verfahrens;
- Figur 7 in einer schematischen Seitenansicht ein Gassack-Modul, das gemäß eines zweiten bevorzugten Verfahrens zusammengefügt ist.

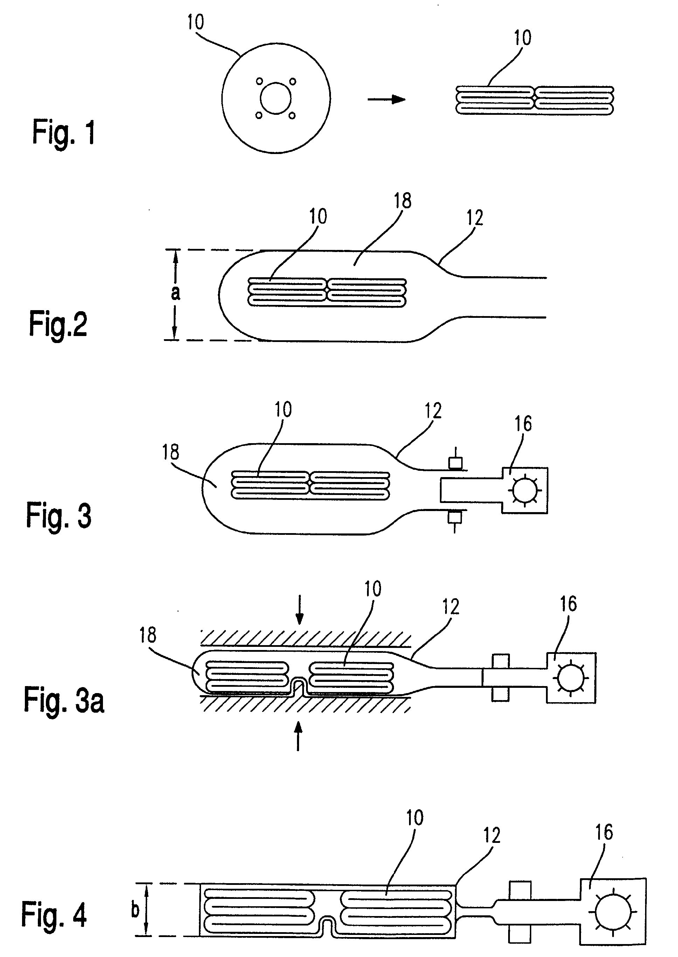

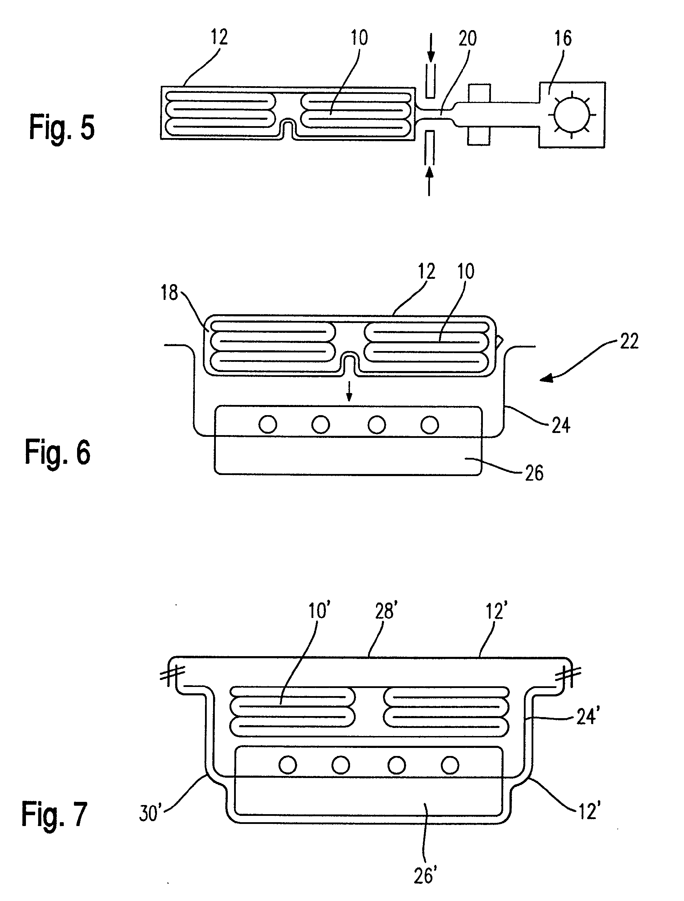

Der in Figur 1 abgebildete Gassack 10 wird gemäß eines der aus dem Stand der Technik bekannten Faltungsverfahrens gefaltet. Anschließend wird er in einer Hülle 12 verstaut. Die Hülle 12 und der Gassack 10 weisen eine Packhöhe a auf. Die Hülle kann beispielsweise eine dünne Kunststoffolie sein. Vorteilhafterweise weist die Kunststoffolie 12 (hier nicht zu sehende) Aufreißlinien auf, an denen die Kunststoffolie dünner ausgeführt ist, so daß sie beim Entfalten des Gassacks entlang dieser Aufreißlinien aufreißen kann. Nach dem Einbringen in die Kunststoffolie 12 kann die Form des Gassacks 10 nachträglich und bedarfsweise verändert werden (siehe Figur 3a). Durch das druckdichte Anbringen und Betätigen einer Vakuumpumpe 16 wird in dem Innenraum 18 ein Unterdruck erzeugt (Figuren 3 und 4), und die ursprüngliche Packhöhe a wird auf eine kleinere Pachhöhe b reduziert. Anschließend wird die Kunststoffolie 12 gasdicht beispielsweise mittels eines thermischen Verfahrens geschlossen, und ein Überstand 20 der Kunststoffolie 12 wird abgetrennt. Der mittels dieses Verfahrens in die Kunststoffolie 12 eingeschweißte Gassack 10 wird in ein Gassack-Modul 22 montiert, das einen schon in ein Gehäuse 24 eingepaßten Gasgenerator 26 aufweist. Das Gassack-Modul 22 wird anschließend in einen dafür vorgesehenen Bauraum eines Fahrzeugs integriert und mittels einer (hier nicht abgebildeten) Abdeckung bezüglich Figur 6 von oben verschlossen.

Gemäß einer weiteren erfindungsgemäßen Ausführungsform ist vorgesehen, daß anstatt des Gassacks 10 oder wahlweise auch zusammen mit dem Gassack 10 der Gasgenerator 26 in der Hülle 12 verstaut wird.

Bei der in Figur 7 gezeigten Ausführungsform ist die Hülle 12' aus der Abdeckung 28' und einem bezüglich Figur 7 unteren Abschnitt 30' der Hülle 12' gebildet. Dabei ist es wahlweise möglich, daß die Abdeckung 28' während des Fertigungsprozesses so geformt wird, daß sie einstückig mit dem bezüglich Figur 7 unteren Abschnitt 30' der Hülle 12' ausgebildet ist Es ist aber auch möglich, daß die Abdeckung 28' und der bezüglich Figur 7 untere Abschnitt 30' der Hülle 12' zwei separate Bauteile des Gassack-Moduls bilden, die während des Montageprozesses beispielsweise mittels eines thermischen Verfahrens gasdicht miteinander verbunden werden. Bei dieser Ausführungsform sind sowohl der Gasgenerator 26' als auch der Gassack 10' und das Gehäuse 24' gasdicht in der Hülle 12' verstaut.

Das auf eine der oben beschriebenen Weisen zusammengefügte Gassack-Modul zeichnet sich dadurch aus, daß mindestens ein Bauteil gasdicht in der mit Unterdruck versehenen Hülle eingeschlossen ist. Dabei ist es besonders vorteilhaft, wenn der Gassack gasdicht in der Hülle eingeschlossen ist. Es ist aber auch vorgesehen, daß bei einem erfindungsgemäßen Gassack-Modul der Gassack und/oder der Gasgenerator gasdicht in der Hülle eingeschlossen sind. Erfahrungsgemäß steigt der Druck in einer solchen mit Unterdruck versehenen und gasdicht verschlossenen Hülle über einen längeren Zeitraum leicht an. Dies ist aber nicht von Nachteil, da es entscheidend ist, daß während des Montageprozesses das kleine Packmaß des bzw. der eingeschlossenen Bauteile gewährleistet ist. Bei einem fertig montierten Gassack-Modul werden die Packmaße der Bauteile automatisch durch die Maße des Gehäuses und die Abdeckung begrenzt.

## Patentansprüche

1. Verfahren zum Zusammenfügen von Bauteilen (10, 12) eines Gassack-Moduls (22) für ein Fahrzeuginsassen-Rückhaltesystem mit folgenden Schritten:
- mindestens ein Bauteil (10) des Gassack-Moduls wird in einer Hülle (12) verstaut;
- es wird ein Unterdruck in dem Innenraum (18) der Hülle (12) erzeugt;
- die Hülle (12) wird gasdicht verschlossen.

2. Verfahren nach Anspruch 1, **dadurch gekennzeichnet, daß** anschließend die wenigstens ein Bauteil (10) umschließende Hülle (12) und weitere Bauteile (12, 24, 26) des Gassack-Moduls zu dem Gassack-Modul (22) zusammengefügt werden.

3. Verfahren nach einem der vorhergehenden Ansprüche, **dadurch gekennzeichnet, daß** das Gassack-Modul (22) einen Gassack (10) aufweist, der im gefalteten Zustand in der Hülle (12) verstaut wird.

4. Verfahren nach Anspruch 3, **dadurch gekennzeichnet, daß** die Form des gefalteten Gassacks (10) nach dem Verstauen in der Hülle (12) nachträglich verändert wird.

5. Verfahren nach einem der Ansprüche 3 oder 4, **dadurch gekennzeichnet, daß** die Hülle (12) mindestens eine Aufreißlinie aufweist.

6. Verfahren nach einem der vorhergehenden Ansprüche, **dadurch gekennzeichnet, daß** das Gassack-Modul (22') einen Gasgenerator (26') aufweist, der in der Hülle verstaut wird.

7. Verfahren nach einem der vorhergehenden Ansprüche, **dadurch gekennzeichnet, daß** das Gassack-Modul (22') eine Abdeckung (28') aufweist, die einen Teil der Hülle bildet.

8. Gassack-Modul (22) für ein Fahrzeuginsassen-Rückhaltesystem, das aus mindestens zwei Bauteilen (10, 12) gebildet ist, **dadurch gekennzeichnet, daß** mindestens ein Bauteil (10) gasdicht in einer mit Unterdruck versehenen Hülle (12) eingeschlossen ist.

9. Gassack-Modul (22) nach Anspruch 8, **dadurch gekennzeichnet, daß** ein Gassack (10) gasdicht in der Hülle (12) eingeschlossen ist.

10. Gassack-Modul (22') nach einem der Ansprüche 8 oder 9, **dadurch gekennzeichnet, daß** ein Gasgenerator (26') gasdicht in der Hülle (12') eingeschlossen ist.
